# EUROPÄISCHE PATENTSCHRIFT

(11) **EP 2 580 584 B1**
(45) Veröffentlichungstag und Bekanntmachung des Hinweises auf die Patenterteilung: **02.03.2016**
(21) Anmeldenummer: 11721500.4
(22) Anmeldetag: 18.05.2011
(51) Int. Cl.: G01N 27/406, G01N 27/417

(54) **VERFAHREN ZUM ERKENNEN DES TYPS VON LAMBDASONDEN**
METHOD FOR IDENTIFYING THE TYPE OF A LAMBDA PROBE
MÉTHODE POUR IDENTIFIER LE TYPE DE SONDE LAMBDA

(30) Priorität: 08.06.2010 DE 102010029776
(43) Veröffentlichungstag der Anmeldung: 17.04.2013
(73) Patentinhaber: Robert Bosch GmbH, 70442 Stuttgart (DE)
(72) Erfinder: BEVOT, Claudius, 70197 Stuttgart (DE); REISCHL, Rolf, 70499 Stuttgart (DE); CLASSEN, Thomas, 70567 Stuttgart (DE); SILLMANN, Benjamin, 70567 Moehringen (DE)
(86) Internationale Anmeldenummer: PCT/EP2011/058045
(87) Internationale Veröffentlichungsnummer: WO 2011/154228

(56) Entgegenhaltungen:
- WO-A1-2009/130266
- WO-A1-2009/135862
- WO-A1-2011/000853
- DE-A1-102009 029 690

## Beschreibung

Die Erfindung betrifft ein Verfahren zum Erkennen des Typs von Lambdasonden nach dem Oberbegriff des Anspruch 1.

Gegenstand der vorliegenden Erfindung sind auch ein Computerprogramm und ein Computerprogrammprodukt, welche zur Durchführung des Verfahrens geeignet sind.

### Stand der Technik

In Fahrzeugen heutiger Bauart kommen die unterschiedlichsten Sonden zum Einsatz. Zum einen existieren Sonden, die zwei auf einem Festelektrolyten angeordnete Pumpelektroden aufweisen, wie sie beispielsweise aus der DE 10 2007 009 157 A1 oder der DE 10 2007 020 970 A1 hervorgehen. Darüber hinaus existieren auch sogenannte Breitbandlambdasonden mit zwei Zellen, wie sie beispielsweise aus der DE 10 2007 057 707 A1 hervorgehen. Diese Sonden dienen der Messung der Konzentration einer Gaskomponente im Abgas der Brennkraftmaschine. Breitbandlambdasonden bestehen im Wesentlichen aus einer Kombination von herkömmlicher, als galvanische Zelle wirkender Konzentrationssonde (Nernst-Sonde) sowie einer Grenzstrom- oder "Pump" zelle. An die Pumpzelle, die von gleicher Art ist wie eine übliche Konzentrationszelle, wird von außen eine Spannung angelegt. Ist die Spannung groß genug, stellt sich ein sogenannter Grenzstrom ein, der proportional dem Unterschied der Sauerstoffkonzentration auf beiden Seiten der Sonde ist. Mit den Stromwerten werden - polaritätsabhängig - Sauerstoffatome transportiert. Eine elektronische Regelschaltung bewirkt, dass der Konzentrationssonde von der Pumpzelle über einen sehr engen Diffusionsspalt immer genau so viel Sauerstoff aus dem Abgas zugeführt wird, dass an ihr der Zustand λ=1 herrscht. Bei Luftüberschuss im Abgas (Magerbereich) wird Sauerstoff abgepumpt. Bei geringem Restsauerstoffgehalt des Abgases (fetter Bereich) wird durch Umkehrung der Pumpspannung Sauerstoff zugeführt. Der jeweilige Pumpstrom bildet das Ausgangssignal. Die Ausgangssignalleitung derartiger Breitbandlambdasonden ist mit dem Motorsteuergerät verbunden.

Wird nun beispielsweise eine Lambdasonde ausgetauscht, so muss rein prinzipiell immer eine Sonde des gleichen Typs verwendet werden. Ein Austausch von Lambdasonden ist nicht ohne Weiteres möglich, da deren Ausgangssignale im Steuergerät nicht ordnungsgemäß verarbeitet werden können. WO2009/130266 beschreibt beispielsweise ein Verfahren zur Bestimmung des Gassensortyps basierend auf der Auswertung der Sprungantwort in Folge eines über eine zusätzliche Stromquelle angelegten Strompulses.

Der Erfindung liegt die Aufgabe zugrunde, ein vereinfachtes Verfahren zum Charakterisieren und Erkennen von Sonden verschiedener Hersteller und unterschiedlichen Typs, deren Ausgangssignale verarbeitbar sind, zu vermitteln.

### Offenbarung der Erfindung

### Vorteile der Erfindung

Die Aufgabe wird durch ein Verfahren zum Erkennen des Typs von Lambdasonden der eingangs beschriebenen Art dadurch gelöst, dass bei wenigstens einer vorgegebenen Betriebstemperatur der Sonde der Innenwiderstand der Lambdasonde zwischen den Elektroden bestimmt wird und aufgrund des Wertes des Innenwiderstandes auf den Sondentyp geschlossen wird.

Erfindungsgemäß ist vorgesehen, dass als wenigstens eine weitere, die Sonde charakterisierende Größe des Innenwiderstand zwischen einer weiteren Elektrode und einer der beiden anderen Elektroden bei wenigstens einer vorgegebenen Betriebstemperatur der Sonde ermittelt werden und aus dem Verhältnis der Innenwiderstände auf den Sondentyp geschlossen wird. So kann beispielsweise der Innenwiderstand zwischen einer inneren Pumpelektrode und einer äußeren Pumpelektrode bei wenigstens einer vorgegebenen Betriebstemperatur der Sonde ermittelt werden und aus dem Verhältnis der Innenwiderstände auf den Sondentyp geschlossen wird.

Durch die in den von Anspruch 1 abhängigen Ansprüchen aufgeführten Maßnahmen sind vorteilhafte Weiterbildungen und Verbesserungen des in dem unabhängigen Anspruch 1 angegebenen Verfahrens möglich.

Neben oder alternativ zur Bestimmung des Innenwiderstands bzw. der Innenwiderstandsverhältnisse können auch Größen verwendet werden, die direkt oder indirekt mit dem Innenwiderstand bzw. mit den Innenwiderstandsverhältnissen und/oder den Kapazitäten der Sonde zusammenhängen.

Eine Weiterbildung der Erfindung betrifft daher auch ein Verfahren zum Erkennen des Typs von Breitbandlambdasonden, die eine Pumpzelle und eine Nernstzelle aufweisen, das dadurch gekennzeichnet ist, dass zwischen der äußeren Pumpelektrode und einer inneren Pumpelektrode ein Kurzschluss erzeugt wird und dass die sich dabei einstellende Spannung zwischen einer Referenzelektrode und der inneren Pumpelektrode gemessen wird und aus der Größe der Spannungsänderung auf den Sondentyp geschlossen wird. Dieses Verfahren ist insbesondere während des Betriebs der Sonde einsetzbar, es kann insbesondere aber auch dann eingesetzt werden, wenn sich die zu identifizierenden Sonden hinsichtlich ihres Innenwiderstandsverhältnisses und hinsichtlich ihres Trimmwiderstands nicht so eindeutig unterscheiden, dass eine Bestimmung der Sonde möglich ist.

Eine Weiterbildung der Erfindung betrifft daher auch ein Verfahren zum Erkennen des Typs von Breitbandlambdasonden, die eine Pumpzelle und eine Nernstzelle aufweisen, das dadurch gekennzeichnet ist, dass zu einem für den ordnungsgemäßen Betrieb der Breitbandlambdasonde erforderlichen, geregelten Pumpstromwert ein einstellbarer zusätzlicher Pumpstrombetrag zwischen einer äußeren Pumpelektrode und einer inneren Pumpelektrode aufgeprägt wird und die Spannungsänderung zwischen einer Referenzelektrode und der inneren Pumpelektrode gemessen wird und aus dieser Spannungsänderung auf den Sondentyp geschlossen wird. Diese Lösung ist insbesondere dann einsetzbar, wenn das Kurzschließen zwischen der äußeren Pumpelektrode und der inneren Pumpelektrode aus schaltungstechnischen Gründen nicht möglich oder nicht vorgesehen ist.

Eine Ausgestaltung dieser letztgenannten beiden Verfahren sieht vor, dass die Messung zyklisch über die Betriebsdauer der Sonde durchgeführt wird und aufgrund der Spannungsänderung der Spannung zwischen Referenzelektrode und innerer Pumpelektrode über die Betriebszeit auf die Alterung der Sonde geschlossen wird. Hierdurch ist eine zusätzliche Aussage über die Elektrodenalterung und die Alterung des Zirkonoxids, welches den Elektrolyten der Sonde bildet, möglich.

Die vorerwähnten erfindungsgemäßen Verfahren können rein prinzipiell als Computerprogramm ausgestaltet sein, welches in einem Steuergeräteprogramm, beispielsweise als Unterprogramm abläuft. Der Programmcode ist vorteilhafterweise auf einem Computerprogrammprodukt, beispielsweise einer CD-ROM, einem Speicherstick oder dergleichen gespeichert und auf diese Weise ist ein Nachrüsten des oder der Verfahren in bestehenden Steuergeräten ohne Weiteres ohne zusätzlichen Hardwareaufwand möglich.

### Kurze Beschreibung der Zeichnungen

Ausführungsbeispiele der Erfindung sind in den Zeichnungen dargestellt und in der nachfolgenden Beschreibung näher erläutert. Es zeigen:
- Fig. 1: schematisch eine aus dem Stand der Technik bekannte Breitbandlambdasonde zur Erläuterung ihres Funktionsprinzips und
- Fig. 2: schematisch die Innenwiderstände der Pumpzelle, der Nernstzelle sowie dem Trimmwiderstand zur Erläuterung der erfindungsgemäßen Verfahren.

### Ausführungsformen der Erfindung

Zur Bestimmung der Gaszusammensetzung im Abgas von Brennkraftmaschinen, insbesondere von Brennkraftmaschinen in Kraftfahrzeugen, werden Gassensoren unterschiedlicher Art eingesetzt. Neben Sauerstoffkonzentrationssensoren, sogenannten Sprungsonden oder Lambdasonden, kommen insbesondere für den weiten Magerbereich sogenannte Breitbandlambdasonden zum Einsatz. Diese bestehen im Wesentlichen aus einer Kombination von herkömmlicher, als galvanische Zelle wirkender Konzentrationssonde, einer sogenannten Nemstsonde, sowie einer Grenzstrom- oder "Pump"zelle.

Das erfindungsgemäße Verfahren wird nachfolgend beispielhaft in Verbindung mit einer solchen Breitbandlambdasonde beschrieben. Es ist an dieser Stelle zu bemerken und hervorzuheben, dass die Erfindung nicht auf derartige Breitbandlambdasonden beschränkt ist, sondern rein prinzipiell auch bei Sonden anwendbar ist, die lediglich aus einer Zelle bestehen und bei der die beiden Elektroden beispielsweise auf der Oberseite eines Elektrolyten angeordnet sind, wie es beispielsweise aus der DE 10 2007 020 970 A1 hervorgeht.

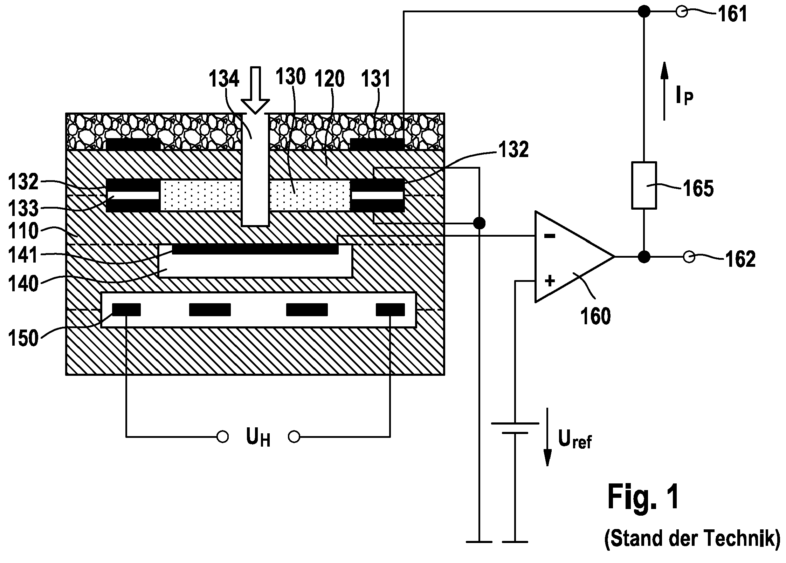

In Fig. 1 ist schematisch der Aufbau einer Breitbandlambdasonde dargestellt. Diese weist eine Nernst-Konzentrationszelle 110 und eine Sauerstoffpumpzelle 120 auf, wobei die Sauerstoffpumpzelle 120 durch eine äußere Pumpelektrode 131 und eine innere Pumpelektrode 132 gebildet wird. Die äußere Pumpelektrode 131 ist dem Abgas A ausgesetzt und die innere, ringförmige Pumpelektrode 132 ist in einem Hohlraum 133 angeordnet, der über einen Kanal 134 und einen Diffusionsspalt, in dem eine Diffusionsbarriere 130 angeordnet ist, mit dem Abgas A verbunden ist. Die Nernstzelle 110 wird durch die innere Pumpelektrode 132 und eine Referenzelektrode 141, die in einem Referenzluftkanal 140 angeordnet ist, gebildet. Die Sonde wird durch eine Heizung 150, an der eine Heizspannung U_{H} anliegt, auf Betriebstemperatur gebracht. Eine Regelschaltung 160, gebildet beispielsweise durch einen Operationsverstärker, an dessen nicht invertierendem Eingang eine Referenzspannung von insbesondere 450 mV anliegt und an dessen invertierendem Eingang das Ausgangssignal der Referenzelektrode 141 anliegt, erzeugt einen Pumpstrom I_{P}, mit dem die äußere Pumpelektrode 131 beaufschlagt wird. Die innere Pumpelektrode 132 ist mit Masse verbunden. Der Pumpstrom I_{P} kann mittels Anschlussklemmen 161, 162 über einen Widerstand 165 abgegriffen werden. Er bildet ein Maß für die Sauerstoffkonzentration, wie nachfolgend kurz beschrieben wird.

An die Pumpzelle 120 wird eine Spannung angelegt. Ist die Spannung groß genug, stellt sich ein "Grenzstrom" ein, der proportional dem Unterschied der Sauerstoffkonzentration auf beiden Seiten der Sonde ist. Mit dem Strom werden - polaritätsabhängig - Sauerstoffatome transportiert. Die Regelschaltung 160 bewirkt, dass der Konzentrationssonde 110 von der Pumpzelle 120 über den engen Diffusionsspalt und die Diffusionsbarriere 130 immer genau so viel Sauerstoff aus dem Abgas A zugeführt wird, dass an ihr der Zustand λ=1 herrscht. Bei Luftüberschuss im Abgas (Magerbereich) wird Sauerstoff abgepumpt. Bei geringem Restsauerstoffgehalt des Abgases (fetter Bereich) wird durch Umkehrung der Pumpspannung Sauerstoff zugeführt. Der Pumpstrom, der über die Klemmen 161, 162 abgreifbar ist, bildet das Ausgangssignal, er stellt ein Maß der Sauerstoffkonzentration und damit des Lambdawertes dar.

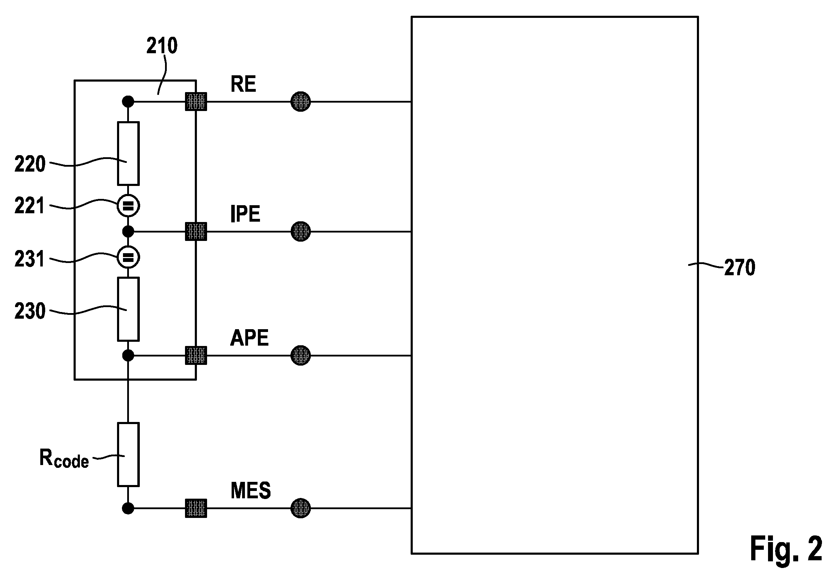

Im Stecker derartiger Breitbandlambdasonden sind nun Trimmwiderstände, auch Abgleich-, Code- oder Rankwiderstände genannt, angeordnet, die beispielsweise parallel zum Widerstand 165 angeordnet sind. Diese dienen der Adaption bzw. der Kalibrierung der Breitbandlambdasonde. Die Breitbandlambdasonde, die in Fig. 2 schematisch durch ein Ersatzschaltbild 210 dargestellt ist, umfasst die den Innenwiderstand 220 und eine fiktive Spannungsquelle 221 der Nernstzelle (in Fig. 1 mit 110 bezeichnet) und den Innenwiderstand 230 und die fiktive Spannungsquelle 231 der Pumpzelle (in Fig. 1 mit 120 bezeichnet). Der Innenwiderstand 220 der Nernstzelle 110 ist über Anschlüsse RE und IPE abgreifbar, wobei "RE" für Referenzelektrode (in Fig. 1 mit 141 bezeichnet) und "IPE" für innere Pumpelektrode (in Fig. 1 mit 132 bezeichnet) stehen. Der Innenwiderstand 230 der Pumpzelle 120 ist über die Anschlüsse IPE und APE abgreifbar, wobei "APE" für äußere Pumpelektrode (in Fig. 1 mit 131 bezeichnet) steht. Außerhalb der Sonde 210 ist ein Trimmwiderstand R_{code}, auch als Abgleich-, Trimm- oder Rankwiderstand bezeichnet, angeordnet, der über einen Anschluss MES abgreifbar ist. Die entsprechenden Ausgangssignalleitungen sind mit einer entsprechenden Schaltungseinheit 217 auch als Lambdasondenauswertebaustein bezeichnet, verbunden. Mit Hilfe dieses Bausteins ist es möglich, die ohm'schen Widerstände sowohl zwischen der Referenzelektrode und der inneren Pumpelektrode (Widerstand 220), als auch zwischen der inneren Pumpelektrode und äußere Pumpelektrode (Widerstand 230), wie auch zwischen der äußeren Pumpelektrode und dem Anschluss MES (Widerstand R_{code}) zu messen und diese Widerstände auszuwerten. Das Verhältnis des Widerstands 220 zum Widerstand 230 stellt eine Charakteristik der Sonde dar. Dieses Verhältnis ist über einen Temperaturbereich von ca. 550°C bis 800°C, also über einem bestimmten vorgegebenen Temperaturbereich, konstant. Bei einer Sonde eines ersten Typs kann dieses Verhältnis beispielsweise 1 : 1 betragen. Der Wert des Trimmwiderstands R_{code} beträgt beispielsweise 4 kOhm. Bei einer Sonde eines anderen Typs ist das Verhältnis der Widerstände 220 zu 230 beispielsweise 4,2 : 1 über dem Temperaturbereich von 550°C bis 800°C und der maximale Trimmwiderstand R_{code} ist kleiner als 150 Ohm. Mittels des Bausteins 170 ist es möglich, die Widerstände und damit die Widerstandsverhältnisse präzise zu bestimmen und so Aussagen über die verwendete Sonde zu treffen.

Wenn die zu identifizierenden Sonden sich hinsichtlich der Innenwiderstandsverhältnisse und des Trimmwiderstands nicht eindeutig unterscheiden, kann gewissermaßen durch Ausmessen des "Abstands" der Referenzelektrode zu der äußeren Pumpelektrode und der inneren Pumpelektrode ein zusätzliches Merkmal zur Identifizierung der Sonde herangezogen werden, welches durch den inneren Aufbau der Sonde bestimmt ist.

Hierzu wird bei einer anderen erfindungsgemäßen Ausgestaltung des Verfahrens die Spannung zwischen der äußeren Pumpelektrode APE und der inneren Pumpelektrode IPE gezielt manipuliert und aufgrund einer Messung der Reaktion an der Referenzelektrode RE dieser "Abstand" bestimmt. Unter Abstand wird hier eine Länge, die zum Beispiel in Millimeter angegeben werden kann, verstanden. Durch die interne Sondenkonstruktion bedingt weisen die Elektroden an der inneren Pumpelektrode und der Referenzelektrode nämlich unterschiedliche Entfernungen zueinander auf. Die Manipulation kann rein prinzipiell auf zwei Weisen erfolgen. Bei einer ersten erfindungsgemäßen Ausgestaltung des Verfahrens wird die Spannung zwischen der äußeren Pumpelektrode und der inneren Pumpelektrode durch die Auswerteschaltung auf 0 V gezwungen, was einem Kurzschluss zwischen den beiden Leitungen der äußeren Pumpelektrode APE und der inneren Pumpelektrode IPE entspricht. Durch diesen Kurzschluss erfolgt eine Veränderung der Spannung zwischen der Referenzelektrode RE und der inneren Pumpelektrode IPE. Diese Änderung der Spannung kann gemessen werden. Die Höhe der Spannungsänderung ist charakteristisch für den jeweiligen Sondentyp.

Falls das Kurzschließen aus schaltungstechnischen Gründen nicht möglich oder nicht vorgesehen ist, so sieht eine alternative erfindungsgemäße Lösung folgendes Verfahren vor. Es wird auf der Basis des letzten geregelten Pumpstromwertes, der einem Pumpstrom für den ordnungsgemäßen Betrieb der Breitbandlambdasonde entspricht, ein einstellbarer und bekannter zusätzlicher Pumpstrombetrag auf die Pumpzelle 120, d.h. auf die innere Pumpelektrode IPE und die äußere Pumpelektrode APE, aufgeprägt und die Spannungsänderung zwischen Referenzelektrode RE und innerer Pumpelektrode IPE gemessen. Die Spannung zwischen Referenzelektrode RE und innerer Pumpelektrode IPE, die im Normalfall auf einen konstanten Wert von 450 mV geregelt wird, erhöht sich oder verringert sich dann um einen charakteristischen Betrag, je nach Polarität des zusätzlichen Pumpstrombetrages. Diese Erhöhung oder Verringerung der Spannung stellt wiederum eine Möglichkeit der Bestimmung des Sondentyps dar, da jeder Sonde ein charakteristischer Betrag zugeordnet ist. Wird diese Messung zyklisch über die Betriebsdauer der Sonde durchgeführt, z.B. in jedem Fahrzyklus nach Motorstart oder im Nachlauf, dann kann anhand der Veränderung des Spannungshubes zwischen der Referenzelektrode RE und der inneren Pumpelektrode IPE über der Zeit eine Aussage über die Alterung der Sonde vorgenommen werden.

Die beschriebenen Alternativen des erfindungsgemäßen Verfahrens können beispielsweise als Computerprogramm auf einem Rechengerät, insbesondere dem Steuergerät 170, implementiert sein und dort ablaufen. Der Programmcode kann auf einem maschinenlesbaren Träger gespeichert sein, beispielsweise einer CD-ROM, einer DVD-ROM, einem Speicherstick oder dergleichen, den das Steuergerät 170 lesen kann.

## Patentansprüche

1. Verfahren zum Erkennen des Typs von Lambdasonden mit wenigstens zwei an und/oder in einem Festelektrolyten angeordneten Elektroden, von denen wenigstens eine durch wenigstens eine Diffusionsbarierre von einem Gasgemisch getrennt ist und von denen wenigstens eine mit einem Pumpstrom beaufschlagt wird, **dadurch gekennzeichnet, dass** bei wenigstens einer vorgegebenen Betriebstemperatur der Sonde der Innenwiderstand der Lambdasonde zwischen den Elektroden bestimmt wird und dass als wenigstens eine weitere, die Sonde charakterisierende Größe der Innenwiderstand zwischen einer weiteren Elektrode und einer der beiden anderen Elektroden bei wenigstens einer vorgegebenen Betriebstemperatur der Sonde ermittelt wird und aus dem Verhältnis der Innenwiderstände auf den Sondentyp geschlossen wird.

2. Verfahren nach Anspruch 1, **dadurch gekennzeichnet, dass** zwischen einer äußeren Pumpelektrode (APE, 131) und einer inneren Pumpelektrode (IPE, 132) ein Kurzschluss erzeugt wird und dass die sich dabei einstellende Spannung zwischen einer Referenzelektrode (RE, 141) und der inneren Pumpelektrode (IPE, 132) gemessen wird und aus der Größe der Spannungsänderung auf den Sondentyp geschlossen wird.

3. Verfahren nach Anspruch 1, **dadurch gekennzeichnet, dass** zu einem für den ordnungsgemäßen Betrieb der Breitbandlambdasonde erforderlichen geregelten Pumpstromwert ein einstellbarer zusätzlicher Pumpstrombetrag zwischen einer äußeren Pumpelektrode (APE, 131) und einer inneren Pumpelektrode (IPE, 132) aufgeprägt wird und die Spannungsänderung zwischen einer Referenzelektrode (RE, 141) und der inneren Pumpelektrode (IPE, 132) gemessen wird und aus dieser Spannungsänderung auf den Sondentyp geschlossen wird.

4. Verfahren nach einem der Ansprüche 2 oder 3, **dadurch gekennzeichnet, dass** die Messung zyklisch über die Betriebsdauer der Sonde durchgeführt wird und aufgrund der Spannungsänderung der Spannung zwischen Referenzelektrode (RE, 141) und innerer Pumpelektrode (IPE, 132) über die Betriebszeit auf die Alterung der Sonde geschlossen wird.

5. Computerprogramm, das alle Schritte eines Verfahrens nach einem der Ansprüche 1 bis 4 ausführt, wenn es auf einem Rechengerät, insbesondere dem Steuergerät (170) einer Brennkraftmaschine abläuft.

6. Computerprogrammprodukt mit Programmcode, der auf einem maschinenlesbaren Träger gespeichert ist, zur Durchführung des Verfahrens nach einem der Ansprüche 1 bis 4, wenn das Programm auf einem Computer oder einem Steuergerät (170) eines Fahrzeugs ausgeführt wird.

## Claims

1. Method for identifying the type of lambda probes having at least two electrodes arranged on and/or in a solid electrolyte, of which electrodes at least one is separated by at least one diffusion barrier from a gas mixture, and of which at least one has a pumping current applied thereto, **characterized in that** the internal resistance of the lambda probe between the electrodes is determined at at least one predefined operating temperature of the probe, and **in that**, as at least one further variable characterizing the probe, the internal resistance between a further electrode and one of the two other electrodes is determined at at least one predefined operating temperature of the probe, and conclusions about the type of probe are drawn from the ratio of the internal resistances.

2. Method according to Claim 1, **characterized in that** a short-circuit is produced between an outer pump electrode (APE, 131) and an inner pump electrode (IPE, 132), and **in that** the voltage established between a reference electrode (RE, 141) and the inner pump electrode (IPE, 132) is measured, and conclusions about the type of probe are drawn from the magnitude of the voltage change.

3. Method according to Claim 1, **characterized in that** at a controlled pumping current value required for the proper operation of the wideband lambda probe, an adjustable additional pumping current is impressed between an outer pump electrode (APE, 131) and an inner pump electrode (IPE, 132), and the voltage change between a reference electrode (RE, 141) and the inner pump electrode (IPE, 132) is measured, and conclusions about the type of probe are drawn from this voltage change.

4. Method according to either of Claims 2 and 3, **characterized in that** the measurement is carried out cyclically over the operating period of the probe and, on the basis of the voltage change of the voltage between reference electrode (RE, 141) and inner pump electrode (IPE, 132) over the operating period, conclusions are drawn about the ageing of the probe.

5. Computer program which executes all the steps of a method according to one of Claims 1 to 4 when it runs on a computing device, in particular the control device (170) of an internal combustion engine.

6. Computer program product having program code which is stored on a machine-readable carrier, for carrying out the method according to one of Claims 1 to 4 when the program is executed on a computer or a control device (170) of a vehicle.

## Revendications

1. Procédé de reconnaissance du type de sondes lambda comportant au moins deux électrodes disposées sur et/ou dans un électrolyte solide, dont au moins l'une est séparée d'un mélange gazeux par au moins une barrière de diffusion et dont au moins l'une est soumise à un courant de pompage, **caractérisé en ce que** la résistance interne de la sonde lambda est déterminée entre les électrodes pour au moins une température de fonctionnement prédéterminée de la sonde et **en ce qu'**au moins une autre valeur caractérisant la sonde de la résistance interne entre une autre électrode et l'une des deux autres électrodes est déterminée pour au moins une température de fonctionnement prédéterminée de la sonde et **en ce que** le type de sonde est déterminé à partir du rapport entre les résistances internes.

2. Procédé selon la revendication 1, **caractérisé en ce qu'**un court-circuit est généré entre une électrode de pompage externe (APE, 131) et une électrode de pompage interne (IPE, 132), et **en ce que** la tension s'établissant ainsi entre une électrode de référence (RE, 141) et l'électrode de pompage interne (IPE, 132) est mesurée et **en ce que** le type de sonde est déterminé à partir de la valeur de la variation de tension.

3. Procédé selon la revendication 1, **caractérisé en ce qu'**une valeur de courant de pompage supplémentaire réglable est fixée entre une électrode de pompage externe (APE, 131) et une électrode de pompage interne (IPE, 132) à une valeur de courant de pompage commandée selon les nécessités pour le fonctionnement normal de la sonde lambda à large bande et **en ce que** la variation de tension entre une électrode de référence (RE, 141) et l'électrode de pompage interne (IPE, 132) est mesurée et **en ce que** le type de sonde est déterminé à partir de ladite variation de tension.

4. Procédé selon l'une des revendications 2 ou 3, **caractérisé en ce que** la mesure est effectuée de manière cyclique pendant la durée de fonctionnement de la sonde et **en ce que** le vieillissement de la sonde est déterminé sur la base de la variation de tension entre l'électrode de référence (RE, 141) et l'électrode de pompage interne (IPE, 132) au cours du temps de fonctionnement.

5. Programme informatique qui met en oeuvre un procédé selon l'une quelconque des revendications 1 à 4 lorsqu'il s'exécute sur un appareil informatique, notamment l'appareil de commande (170) d'une machine à moteur à combustion interne.

6. Produit de programme informatique comportant un code de programme qui est stocké sur un support lisible par ordinateur pour mettre en oeuvre un procédé selon l'une quelconque des revendications 1 à 4 lorsque le programme est exécuté sur un ordinateur ou un appareil de commande (170) d'un véhicule automobile.
